(19) Europäisches Patentamt
European Patent Office
Office européen des brevets

(11) **EP 1 571 014 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
*B60G 17/015* (2006.01)     *B60G 5/00* (2006.01)
*B62D 61/12* (2006.01)     *B60G 17/052* (2006.01)

(21) Anmeldenummer: **05000088.4**

(22) Anmeldetag: **05.01.2005**

(54) **Fahrzeug-Anfahrhilfe**

Start-assist for a vehicle

Aide au démarrage pour un véhicule

(84) Benannte Vertragsstaaten:
**DE FR GB IT NL SE**

(30) Priorität: **04.03.2004 DE 102004010548**

(43) Veröffentlichungstag der Anmeldung:
**07.09.2005 Patentblatt 2005/36**

(73) Patentinhaber: **WABCO GmbH**
**30453 Hannover (DE)**

(72) Erfinder:
• **Jovers, Ingo**
**30989 Gehrden (DE)**
• **Barghoorn, Edzard**
**26725 Emden (DE)**
• **Gocz, Reinhard**
**30926 Seelze (DE)**
• **Kleen, Berend**
**30161 Hannover (DE)**

(74) Vertreter: **Schrödter, Manfred et al**
**WABCO GmbH**
**Postfach 91 12 62**
**30432 Hannover (DE)**

(56) Entgegenhaltungen:
EP-A- 1 167 094     EP-B- 0 411 352
WO-A-00/56561     WO-A-03/000512
DE-A1- 3 545 222     DE-A1- 4 317 847
DE-A1- 4 327 764     JP-A- 4 161 827
JP-A- 8 118 936     US-A- 4 783 089

## Beschreibung

Die Erfindung betrifft eine Vorrichtung zur Steuerung der Achslast von Fahrzeugen entsprechend dem Oberbegriff des Patentanspruchs 1.

Eine derartige Achslast-Steuervorrichtung ist aus der EP 0 411 352 B1 bekannt, welche als Anfahrhilfe für luftgefederte Mehrachsfahrzeuge dient, bei denen an den Achsen über Ventilmittel mit Druckluft versorgbare Luftfederbälge vorgesehen sind. Neben zumindest einer Antriebsachse (Triebachse) ist zumindest eine liftbare Zusatzachse vorgesehen. Zur Aktivierung der Anfahrhilfe werden die Luftfederbälge der Zusatzachse vollständig entlüftet, und bei Bedarf wird die Zusatzachse zusätzlich über eine Liftvorrichtung angehoben, wodurch die dabei freiwerdende Achslast zusätzlich auf die Triebachse übertragen wird, um so die Achslast der Triebachse zu erhöhen. Bei Erreichen der maximalen Achslast auf der Triebachse wird über einen mit einem Luftfederbalg der Antriebsachse verbundenen Druckschalter der Stromkreis zu den die Achslastverlagerung bewirkenden Magnetventilen unterbrochen. Ein weiterer Anstieg der Achslast auf der Triebachse wird dadurch vermieden, die erreichte Achslastverlagerung wird "eingefroren" und damit wird die gesetzlich zugelassene Belastung der Triebachse ausgenutzt. Bei dieser Schrift wird als Maß für die Achslast der Druck in einem Luftfederbalg der Triebachse verwendet. Eine andere Achslast-Steuervorrichtung ist aus der WO 00/56561 bekannt.

Bei Fahrzeugen, die mit einer Anfahrhilfe nach der vorstehend erläuterten Schrift ausgestattet sind, können sowohl alle Achsen als auch nur die Triebachse und die entlastbare Achse (Ausführung als Schlepp- oder als Liftachse) zusätzlich mit einer elektronischen Niveauregelung ausgerüstet sein; dann wird der Druck in den Luftfederbälgen dieser Achsen durch eine elektronische Niveauregel-Steuereinheit eingeregelt, die bewirkt, dass ein vorgegebenes Soll-Niveau zwischen Aufbau und Achsen durch Einspeisung eines dieser Höhe entsprechenden Druckes in den zugeordneten Luftfederbälgen über Ventilmittel eingestellt wird.

Ist die entlastbare Achse des Fahrzeugs z. B. bei starker Beladung zur Tragkraftunterstützung aktiviert, dann werden ihre Luftfederbälge mit den Triebachsen-Luftfederbälgen über die Niveauregel-Steuereinheit zur Höhenangleichung ebenfalls be- und entlüftet, wobei es für diese Regelung z. B. die folgenden Ausführungsformen gibt:

Bei einer Druckgleichheitsregelung (1. Ausführungsform) wird der Druck in den Luftfederbälgen der entlastbaren und der Triebachse auf den gleichen Druckwert eingeregelt, wozu nur ein Drucksensor erforderlich ist.

Dagegen werden bei einer Druckverhältnisregelung (2. Ausführungsform) die Drücke in den Luftfederbälgen der entlastbaren und den Luftfederbälgen der Antriebsachse auf ein bestimmtes Druckverhältnis eingeregelt, und hierzu sind dann zwei Drucksensoren erforderlich.

Bei beiden Ausführungsformen kann eine Anfahrhilfe in der Art der Achslastverlagerung der vorbekannten Schrift durchgeführt werden; auch bei diesen Lösungen wird der in den Luftfederbälgen der Triebachse herrschende Druck als Maß für deren Achslast benutzt.

Unter Zugrundelegung von Luftfederbälgen üblicher Bauart besteht bei allen diesen Lösungen, bei denen die Achslastermittlung nur auf dem in den Triebachsen-Luftfederbälgen herrschenden Druck beruht, der Nachteil, dass die "feste" Zuordnung eines Drucks zu einer Achslast nur für eine Niveauhöhe, üblicherweise für das Fahrniveau, gilt.

Wenn z. B. das Fahrzeug abgesenkt ist oder ein zweites Fahrniveau gewählt ist, gilt diese festgelegte Achslast-Druck-Beziehung nicht mehr, und so wird bei der Anfahrhilfe die zulässige Achslast entweder über- oder unterschritten. Bei einer Unterschreitung wird mögliche Traktion "verschenkt" und bei einer Überschreitung werden gesetzliche Bestimmungen verletzt.

Der Erfindung liegt deshalb die Aufgabe zugrunde, eine Anfahrhilfe derart zu verbessern, dass sie bei jeder Niveauhöhe die gesetzlich zulässigen Vorgaben erfüllt.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die Erfindung hat den Vorteil, dass bei der Anfahrhilfen-Achslastverlagerung immer korrekte, der wirklichen Beladung der zugehörigen Achsen entsprechende Werte berücksichtigt werden; mit der Erfindung wird weiter der Nachteil der Höhenabhängigkeit der Achslastverlagerung bei der Anfahrhilfe nach dem Stand der Technik beseitigt.

Eine Weiterbildung der Erfindung hat den Vorteil, dass auch die sich bei einer Niveauhöhenveränderung ändernde Hub-/Tragkraft-Charakteristik der Luftfederbälge bei der Bestimmung der Anfahrhilfe berücksichtigt ist.

Eine hierauf aufbauende Weiterbildung der Erfindung hat den Vorteil, dass unterschiedliche Hub-/Tragkraft-Kennlinien von unterschiedlichen Balgkonstruktionen berücksichtigt werden können.

Eine Weiterbildung der Erfindung hat den Vorteil, dass spezifische, für verschiedene Länder geltende maximale Achslasten per Parameter einstellbar sind; darauf basierend kann entsprechend weiteren Weiterbildungen der Erfindung die für die Triebachse während der Anfahrhilfe geltende maximale Achslast vorteilhafterweise mit einer länderspezifischen zeitlichen und/oder geschwindigkeitsabhängigen Begrenzung versehen werden.

Die Erfindung wird im folgenden anhand eines Ausführungsbeispiels, das in der Zeichnung dargestellt ist, näher erläutert.

Es zeigen:

Fig. 1    Die Funktion der Anfahrhilfen-Traktionserhöhung durch Verlagerung von Achslast am Beispiel eines Zugfahrzeugs;

Fig. 2    für luftgefederte Achsen verwendete Luftfederbälge in zwei typischen Ausbildungen;

Fig. 3    eine messtechnisch ermittelte Achslastkennlinie für die Luftfederbälge einer luftgefederten Achse;

Fig. 4    eine Funktion zur Korrektur einer zur Achslastbestimmung verwendeten Kalibrierfläche eines Luftfederbalgs über dem aktuellen Ist-Niveau des Fahrzeugaufbaus.

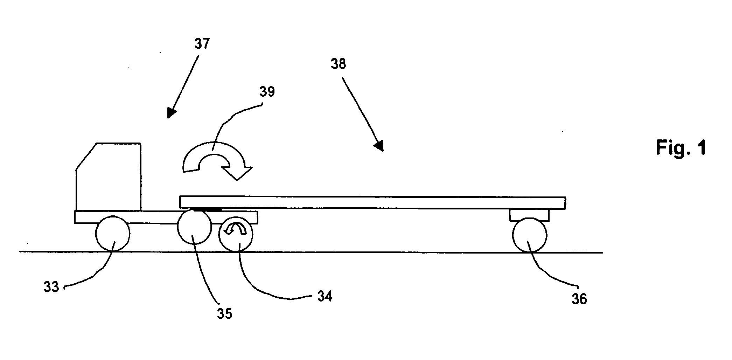

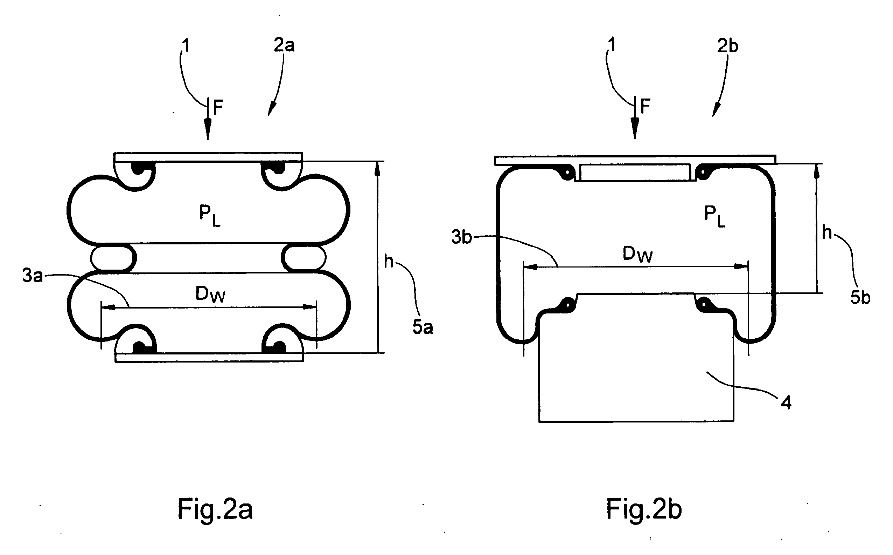

Bei einem für das erfindungsgemäße Anfahrhilfen-Steuerungsverfahren geeigneten Fahrzeug nach Fig. 1 ist mindestens eine entlastbare Achse (35) zur Übernahme eines Lastanteils bei stark beladenem Fahrzeug vorgesehen; diese Achse und mindestens die Triebachse (34, mit Drehpfeil) des Fahrzeugs sind als luftgefederte Achsen mit jeweils mindestens einem, den Fahrzeugaufbau über der Achse abstützenden Luftfederbalg (2a, 2b) nach Fig. 2 ausgebildet. Mindestens diese Achsen (35, 34) sind mit einer elektronischen Niveauregeleinrichtung ausgestattet, mit Hilfe derer ein Sollniveau, nämlich ein vorgebbarer Abstand zwischen dem Fahrzeugaufbau und den Achsen, als Ist-Niveau unabhängig von wechselder Beladung eingehalten wird. Dabei sind mindestens die Triebachse und die mindestens eine entlastbare Achse (35) mit einer Lastsensierungseinrichtung ausgerüstet, indem, wie unten erläutert, der in dem mindestens einen für eine luftgefederte Achse vorgesehenen Luftfederbalg herrschende Luftdruck durch Sensormittel gemessen wird.

Das für die Anfahrhilfe vorgesehene Fahrzeug kann entweder als Einzelfahrzeug oder als Zugfahrzeug eines Fahrzeugzuges, bestehend aus Zugfahrzeug und Anhängefahrzeug, ausgebildet sein, im Ausführungsbeispiel nach Fig. 1 besteht dieses Fahrzeug aus dem Zugfahrzeug (37), das mit dem als Auflieger ausgebildeten Anhängefahrzeug (38) gekoppelt ist. Das Zugfahrzeug ist als 6x2-Fahrzeug ausgebildet, es verfügt über eine Vorderachse (33) und die vorstehend erläuterten Achsen, nämlich die entlastbare Achse (35) und die Triebachse (34). Die entlastbare Achse (35) ist im Ausführungsbeispiel zwischen Triebachse (34) und Vorderachse (33) angeordnet, sie ist als Liftachse ausgebildet und in Fig. 1 in entlastetem und abgehobenen Zustand gezeichnet . Die entlastbare Achse kann alternativ auch als Schleppachse ausgeführt sein; eine entlastbare Achse kann in Fahrtrichtung sowohl vor als auch hinter der Triebachse eingeordnet werden (im Vergleich zu einer Schleppachse verfügt eine Liftachse noch über mindestens einen, meist pneumatischen Liftzylinder).

Das Anhängefahrzeug (38) ist im Ausführungsbeispiel mit einer festen Achse (36) ausgerüstet.

Eine Anfahrhilfe dient zur Erhöhung der Traktion des Zugfahrzeugs (37) beim Anfahren, wenn bei ungünstigem Reibungsverhältnis der Fahrbahn (geringe $\mu$-Reibwerte bei z. B. Nässe oder Eis) die von den Rädern der Triebachse (34) auf die Fahrbahn übertragbare Vortriebskraft beim Anfahren überschritten wird und mindestens ein Rad der Triebachse (34) durchzudrehen beginnt: Zur Abhilfe wird in diesem Fall die Achslast auf die Triebachse (43) erhöht, indem, wie durch einen Pfeil (39) angedeutet, durch Entlastung der entlastbaren Achse (35) eine Achslastverschiebung zur Triebachse (34) erfolgt.

Erfindungsgemäß werden im Zuge dieser Achslastverschiebung die aktuellen Achslasten für die Triebachse (34) und für die entlastbare Achse (35) als Achslast-Gewichtskräfte bestimmt, und die Entlastung der entlastbaren Achse (35) wird als im Gegensatz zur üblichen Druckregelung als Kraftregelung durchgeführt.

Die Achslast einer Achse stellt diese Achslast-Gewichtskraft dar, die vom Fahrzeugaufbau auf die betreffende Achse ausgeübt wird; für eine luftgefederte Achse wird die Achslast-Gewichtskraft durch das Produkt aus dem in den dieser Achse zugeordneten Luftfederbälgen herrschenden Luftdruck $p_L$ und der Summe $A_W$ der aktuellen Flächen (bei der vorliegenden Niveauhöhe aktuell geltenden wirksamen Flächen) dieser Luftfederbälge bestimmt. Der Luftdruck $p_L$ wird über einen Drucksensor erfasst, so dass sich mit der bekannten gesamten wirksamen Fläche $A_W$ die Achslast-Gewichtskraft für eine luftgefederte Achse nach folgender Gleichung bestimmt:

$$F_{Achse-Luft} = A_W \cdot p_L \qquad\qquad [1]$$

Das Bedürfnis zur Aktivierung der Anfahrhilfe tritt auf, wenn beim Anfahren eines oder beide Räder der Triebachse (34) des Zugfahrzeugs (37) durchzudrehen beginnen, und dann wird eine Traktionserhöhungs-Anforderung an eine für die Anfahrhilfe zuständige Zugfahrzeug-Steuereinheit gestellt, welche entweder durch den Fahrer mit Betätigung eines entsprechenden Schalters, oder automatisch durch eine z. B. als ABS-/ASR-Steuereinheit ausgebildete, den Schlupf der Triebachse (34) des Zugfahrzeugs (37) überwachende elektronische Steuereinheit erfolgt, wenn diese das beginnende Durchdrehen erkennt und z. B. über geeignete Datenbusmittel die Traktionserhöhungs-Anforderung als Botschaft an die Zugfahrzeug-Steuereinheit stellt.

Nach Vorliegen einer Traktionserhöhungs-Anforderung werden erfindungsgemäß in einem ersten Schritt die aktuellen Achslasten für die Triebachse (34) und für die entlastbare Achse (35) bestimmt.

Es wird dann in einem zweiten Schritt geprüft, ob die aktuelle Achslast der Triebachse (34) kleiner ist als ihre zulässige maximale Achslast.

Wenn die Prüfung ergibt, dass die aktuelle Achslast der Triebachse (34) nicht kleiner (d. h. entweder gleich noch größer) als ihre maximale Achslast ist, so ist eine weitere Achslastverlagerung nicht möglich und es wird keine Aktivierung der Traktionserhöhung vorgenommen. Ergibt die Prüfung, dass die aktuelle Achslast kleiner ist als die maximale Achslast, so wird in einem dritten Schritt die Traktionserhöhung aktiviert und es wird eine Entlastung der entlastbaren Achse (35) vorgenommen.

Bei dieser Entlastung wird der Druck in den der entlastbaren Achse (35) zugeordneten Luftfederbälgen verringert und der durch die Verringerung "frei werdende" Lastanteil wird auf die Triebachse (34) übertragen; durch die Achslastverlagerung (39) wird also die auf der Triebachse (34) ruhende Achslast erhöht. Während der in zeitlichen Schritten durchgeführten Achslastverlagerung (8) wird per Kraftvergleich laufend, d. h. nach jedem Schritt jeweils überprüft, ob die maximal zulässige Achslast der Triebachse (34) unterschritten, erreicht oder überschritten wird. Die Achslastverlagerung (39) wird nur bis maximal dem Zustand durchgeführt, dass die maximal zulässige Achslast der Triebachse (34) eingehalten ist, und dann wird die Achslastverlagerung (39) beendet: An der Triebachse (34) ist nun die maximal zulässige Achslast-Gewichtskraft für die Anfahrhilfen-Traktionserhöhung eingeregelt.

Hierzu sei ergänzt, dass die Zugfahrzeug-Steuereinheit mit Ventilmitteln zur Be- und Entlüftung, mit den Luftfederbälgen und den Druck-Sensormitteln für die entlastbare Achse (35) einen Regelkreis bildet, durch den ein für diese Achse vorgegebener Sollwert der Achslast-Gewichtskraft als Istwert eingestellt wird. Bei jedem Schritt der Achslastverlagerung wird jeweils nach Einstellung dieser per Sollwert vorgegebenen Achslast-Gewichtskraft an der entlastbaren Achse (35) über die der Triebachse (34) zugeordneten Sensor-Messmittel die an der Triebachse (34) herrschende Achslast ermittelt; der dort zunächst gemessene Druck wird ebenfalls in eine Achslast-Gewichtskraft umgerechnet, und dann wird der oben erläuterte Kraftvergleich durchgeführt, nach dem entweder die Achslastverlagerung beendet ist, oder noch weitere Schritte der Achslastverlagerung erforderlich sind.

Mit der Regelung der "richtigen" Achslast bei der Anfahrhilfe lassen sich auch die gesetzlichen Unterschiede bei den für die Anfahrhilfe zugelassenen Achslasten in verschiedenen Ländern, wie sie in diesen Ländern gelten, berücksichtigen; in einem bestimmten Land wird die Anfahrhilfe dann unter Einhaltung der in diesem Land geltenden gesetzlich festgelegten zulässigen Achslasten durchgeführt.

Diese länderspezifischen Achslasten werden per Parameter im Speicher der Zugfahrzeug-Steuereinheit abgelegt und werden im jeweiligen Land über eine manuell oder automatisch über eine GPS-Positionserfassung gesteuerte Wähleinrichtung für die Durchführung der Anfahrhilfe in diesem Land eingestellt.

Auf diese Weise können dann auch die in verschiedenen Ländern geltenden weiteren Begrenzungen, nämlich zeitlichen Begrenzungen für die Anfahrhilfen-Traktionserhöhung (z. B. <90 Sekunden) oder/und z. B. Begrenzungen der Anfahrhilfen-Traktionserhöhung auf eine maximale Geschwindigkeit des Fahrzeugs, die bei der Anfahrhilfe unterschritten werden muss (z. B. <30 km/h) berücksichtigt werden, indem diese Größen als weitere länderspezifische Parameter zur Durchführung der Anfahrhilfe gespeichert sind.

Nach der vorstehenden Erläuterung des grundsätzlichen Verfahrens der Achslastverlagerung wird im folgenden auf eine vorteilhafte Bestimmung der Achslast-Gewichtskräfte für die Tragachse (34) und die entlastbare Achse (35) eingegangen. Im Rahmen der oben erläuterten schrittweisen Achslastverlagerung werden diese Bestimmungen mehrfach durchgeführt und das nachstehend beschriebene Berechnungsverfahren erlaubt es, die Achslast-Gewichtskräfte bei der nichtlinearen Hub-Tragkraft-Charakteristik von Luftfederbälgen mit nur wenigen Rechenoperationen, ohne Verwendung von Divisionen zu berechnen, so dass ein üblicher Mikrocontroller als Recheneinheit der Zugfahrzeug-Steuereinheit diese Rechenschritte problemlos ausführen kann, ohne überlastet zu werden.

Da das Rechenverfahren für beide Achsen gleich ist, natürlich mit unterschiedlichen Parametern, wird es mit Bezug auf Fig. 2 bis Fig. 4 für eine Achse beschrieben, die dort verallgemeinert als Anzeige-Fahrzeugachse bezeichnet ist.

Bei der Bestimmung der Achslast-Gewichtskräfte für die Tragachse (34) stellt diese die Anzeige-Fahrzeugachse dar, während die Anzeige-Fahrzeugachse die entlastbare Achse (35) für die Bestimmung der Achslast-Gewichtskräfte für die entlastbare Achse (35) ist; dabei gelten für die Tragachse (34) und die entlastbare Achse (35) jeweils diesen Achsen zugeordnete Kalibrierflächen-Korrekturfunktionen, wie dies nachstehend für eine beispielhafte Anzeige-Fahrzeugachse erläutert ist.

In Fig. 2 sind zwei typische Ausführungsformen von Luftfederbälgen gezeigt, Fig. 2a zeigt einen Luftfederbalg (2a) in der Ausführung als Faltenbalg, und Fig. 2b zeigt eine Ausführung als Rollbalg (2b); beide Luftfederbälge sind in einem Zustand dargestellt, in dem sie durch die oben erläuterte Wirkung der elektronischen Niveauregeleinrichtung mit einer bestimmten Luftmenge zur Einhaltung des Ist-Niveaus befüllt sind.

Entsprechend Formel [1] ist die wirksame Fläche dieser Luftfederbälge $A_W$ und in ihnen herrscht in diesem Zustand der Druck $p_L$, sodass sich für die Achslast-Gewichtskraft F (1) nach Fig. 2 ergibt:

$$F \;=\; A_W \cdot p_L \hspace{6cm} [2]$$

Hierbei bestimmt sich die wirksame Fläche $A_W$ aus dem wirksamen Durchmesser $D_W$ (3a, 3b) des Luftfederbalgs:

$$A_W \;=\; \frac{\pi}{4} \, D_W^2 \hspace{6cm} [3]$$

Wie dem Fachmann bekannt ist, ändert sich der wirksame Durchmesser $D_W$ (3) sowohl statisch mit der Höhe des Ist-Niveaus als auch dynamisch mit der Ein- und Ausfederung, ausgehend von einem gewählten Ist-Niveau (Balgfederkennlinie). Dass dieser Niveauhöheneinfluss für beide Balgtypen unterschiedlich ist, ist aus der Gegenüberstellung beider Balgtypen in Fig. 2 spontan ersichtlich; wie die Bezeichnung nahelegt, ändert sich beim Faltenbalg (2a) bei einer Niveauhöhenveränderung der Faltzustand, und damit der wirksame Durchmesser $D_W$ (3a), und beim Rollbalg (2b) wölbt sich der als biegeschlaffe Membran ausgebildete Rollbalg (2b) niveauhöhenabhängig über das Stützelement (4), so dass sich ebenfalls eine niveauhöhenabhängige Veränderung des wirksamen Durchmessers $D_W$ (3b) ergibt. Der Niveauhöhen-Einfluss auf den wirksamen Durchmesser $D_W$ (3) und damit auf die wirksame Fläche $A_W$ eines Luftfederbalgs (2) ist also vom Typ des Luftfederbalgs abhängig; die Erfindung ist für einen Niveauhöhen-Einfluss auf die wirksame Fläche eines Luftfederbalgs jeglicher Art anwendbar, auch muss die Art dieser Beeinflussung zur Anwendung der Erfindung gar nicht bekannt sein.

Wie erläutert, wird die Achslast-Gewichtskraft F (1) nach Formel [2] bestimmt; hierfür ist für das Ist-Niveau (5) ein bestimmtes Kalibrierniveau $h_O$ festgelegt, und für dieses Kalibrierniveau gibt es eine ganz bestimmte wirksame Fläche $A_{WO}$, die eine Kalibrierfläche darstellt. Für das Kalibrierniveau kann z. B. das normale Niveau des Fahrzeugs für die Fahrt gewählt werden; alternativ ist es z. B. auch möglich, das kleinste Ist-Niveau als Kalibrierniveau vorzusehen.

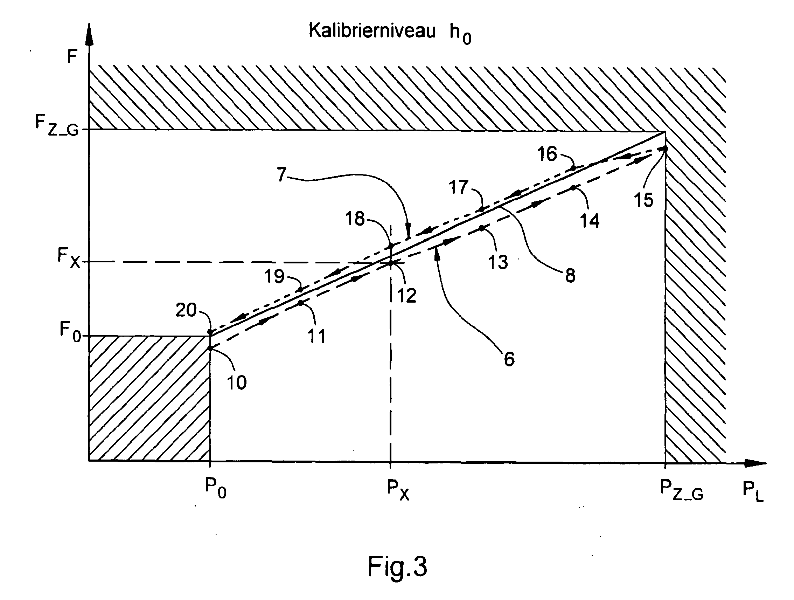

Die Erfindung geht von einer bestimmten Achslastkennlinie für die jeweilige Anzeige-Fahrzeugachse aus, nämlich einer Kennlinie, die die Achslast-Gewichtskraft F (1) über dem Balgdruck $p_L$ beschreibt. Eine derartige Achslastkennlinie kann unter Zugrundelegung der Kenndaten der verwendeten Luftfederbälge und der festgelegten mechanischen Abmessungen für die gewählte Konstruktion (im Wesentlichen die der Anlenkungen) von Achse und Fahrzeugaufbau rechnerisch ermittelt werden. Alternativ kann diese Achslastkennlinie auch messtechnisch erfasst werden, wie dies in der Zeichnung Fig. 3 dargestellt ist.

Zur messtechnischen Ermittlung der Achslastkennlinie wird das Fahrzeug auf eine Achslastwaage derart gefahren, dass die beiden Räder der Anzeige-Fahrzeugachse frei auf den linken und rechten Wägeplattformen der Achslastwaage stehen. Dann wird z. B. unter Verwendung eines Krans durch Auflegen von Last (z. B. von Zement-Gewichtsplatten) die Achslast stufenweise erhöht, und es wird für die Achslast jeder Stufe der Druck $p_L$ im Luftfederbalg (2) derart erhöht, dass sich das Kalibrierniveau $h_o$ einstellt. Die von der Achslastwaage ermittelte Achslast-Gewichtskraft F (1) und der Druck $p_L$ im Luftfederbalg werden, wie in Fig. 3 dargestellt, in das F-/$p_L$- Diagramm eingetragen.

Ausgehend von einem Druck $p_0$, dem minimalen Druck, bei dem ein Luftfederbalg gerade so weit befüllt ist, um seine mechanische Zerstörung zu verhindern und auf den Luftfederbalg in diesem Zustand vom Aufbau die kleinstmögliche Achslast-Gewichtskraft $F_0$ ausgeübt wird, wird, im Beispiel nach Fig. 3, in fünf Schritten (11, 12, 13, 14, 15) die Last stufenweise erhöht und die Messpunkte $F_x$ der jeweils gemessenen Achslast-Gewichtskräfte werden über den entsprechend eingestellten Balgdrücken $p_x$ aufgetragen, so dass in der obersten Messstufe (15) das zulässige Gesamtgewicht für die Fahrzeugachse wirksam ist und dementsprechend auf den Luftfederbalg (2) mit dem maximal zulässigen Druck $p_{z\_G}$ die maximal zulässige Achslast-Gewichtskraft $F_{z\_G}$ einwirkt.

Die Verbindung dieser insgesamt 6 Messwerte (10, 11, 12, 13, 14, 15) ergibt in Fig. 3 den aus fünf Geradenstücken zusammengesetzten Achslast-Kennlinienzweig (6) für ansteigenden Druck (grob gestrichelt dargestellt mit Pfeil nach rechts oben).

Nach dieser stufenweisen Erhöhung wird die Last vorzugsweise aber nicht zwingend in Stufen gleicher Höhe (16, 17, 18, 19, 20) wieder erniedrigt, wodurch sich in gleicher Weise ein Kennlinienzweig (7) für abfallenden Druck ergibt (fein gestrichelt dargestellt mit Pfeil nach links unten), der aus Gründen der reibungsbedingten Hysterese in der Mechanik im Vergleich zum Kennlinienzweig (6) in Richtung höherer Achslast-Gewichtskräfte F verschoben ist.

Durch Mittelbildung aus dem Achslast-Kennlinienzweig (6) für ansteigenden Druck und dem Achslastkennlinienzweig (7) für abfallenden Druck ergibt sich die Achslastkennline (8) als Grundlage zur Bestimmung der Achslast-Gewichtskraft F (1) nach der Erfindung. Es sei ergänzt, dass das stufenweise Anheben (10 bis 15) und das stufenweise Absenken (16 bis 20) auch mehrfach durchgeführt werden kann, um Messfehler durch Hystereseeinflüsse auszumitteln und die Genauigkeit der Achslastkennlinie (8) zu erhöhen; natürlich können zur Genauigkeitserhöhung auch mehr als 5 Stufen gewählt werden, während bei verringerten Genauigkeitsanforderungen auch weniger als 5, z. B. 3 Stufen gewählt werden können.

Die Achslastkennlinie (8) als gemittelte Kennlinie zwischen den Kennlinienzweigen (6) und (7) stellt mit guter Näherung ein Geradenstück zwischen der kleinsten Kraft $F_0$ beim Druck $p_0$ und der maximal zulässigen Kraft $F_{z\_G}$ beim Druck $p_{z\_G}$ dar. Die Achslastkennlinie (8) ist durch die lineare Beziehung

$$F = F_0 + A_{W0} \cdot p_L \qquad [4]$$

beschrieben, in der eine Kalibrierfläche $A_{W0}$ die Steigung der Kennlinie darstellt; mit der Bestimmung der Achslastkennlinie (8) ist diese Kalibrierfläche $A_{W0}$ festgelegt, welche die wirksame Fläche der der Anzeige-Fahrzeugachse zugeordneten Luftfederbälge für den Fall darstellt, wenn das Ist-Niveau gleich dem Kalibrierniveau $h_O$ ist.

Für andere Niveauhöhen h als dem Kalibrierniveau $h_0$ liegt statt der Kalibrierfläche $A_{W0}$ die wirksame Fläche $A_W$ vor, welche mit Hilfe einer Korrekturfunktion aus der Kalibrierfläche $A_{W0}$ bestimmt wird. Diese Kalibrierflächen-Korrekturfunktion k beschreibt die Abhängigkeit der wirksamen Fläche $A_W$ der der Anzeige-Fahrzeugachse zugeordneten Luftfederbälge von diesem aktuellen Ist-Niveau h des Fahrzeugaufbaus. Für die Korrektur der Kalibrierfläche $A_{W0}$ wird dann das aktuelle Ist-Niveau h in die Kalibrierflächen-Korrekturfunktion k eingesetzt.

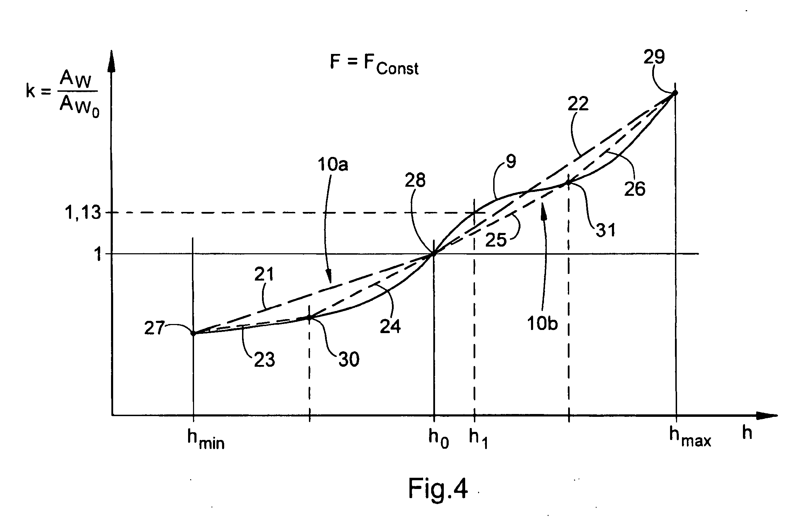

Wie in Fig. 4 dargestellt ist diese Kalibrierflächen-Korrekturfunktion k (9) vorteilhaft als Verhältnis der wirksamen Fläche $A_W$ der Luftfederbälge zur Kalibrierfläche $A_{W0}$ ausgebildet; auf der Ordinate ist die Korrekturfunktion k, und auf der Abszisse ist die Niveauhöhe h aufgetragen. Zur Verdeutlichung ist in Fig. 4 eine Kalibrierflächen-Korrekturfunktion k (9) mit vergleichsweise komplexem Niveauhöheneinfluss dargestellt.

Einführung der Kalibrierflächen-Korrekturfunktion k(h) in Gleichung [4]:

$$F = F_0 + A_{W0} \cdot p_L \cdot k(h) \qquad [5]$$

Da eine rechnerische Bestimmung des Niveauhöheneinflusses auf die wirksame Fläche eines Luftfederbalges wegen der vielen hierzu benötigten Einflussgrößen, die zunächst nicht bekannt sind, einerseits aufwendig ist und andererseits auch wegen der Nichtlinearitäten in diesen Einflussgrößen die Gefahr besteht, dass ein rechnerisch bestimmtes Ergebnis mit der Praxis nicht hinreichend im Einklang steht, wird die Korrekturflächen-Korrekturfunktion (9) nach Fig. 4 messtechnisch ermittelt.

Die einfachste Methode stellt hierbei die Ermittlung bei einer festen Last dar, d. h. bei Belastung der Anzeige-Fahrzeugachse mit einer festen Achslast-Gewichtskraft $F_{const}$, für die z. B. die Hälfte der maximal zulässigen Achslast-Gewichtskraft $F_{z\_G}$ gewählt wird:

$$F = F_{Const} \qquad [6]$$

Durch Einsetzen von Gleichung [6] in Gleichung [5] ergibt sich für die Korrekturflächen-Korrekturfunktion k (h) :

$$k(h) = \frac{F_{Const} - F_0}{A_{W0} \cdot p_L} \qquad [7]$$

Zur Messung wird nach Beladung der Anzeige-Fahrzeugachse mit der festgelegten Last an der Anzeige-Fahrzeugachse zunächst das Kalibrierniveau $h_0$ eingestellt. Bei dieser Last wird nun, ausgehend von der Kalibrierhöhe $h_0$, durch Verringerung bzw. Erhöhung des Luftfederbalg-Drucks $p_L$ die Niveauhöhe einmal bis zur minimalen Höhe $h_{min}$ verringert und einmal bis zur maximalen Niveauhöhe $h_{max}$ erhöht; für jede eingestellte Niveauhöhe h wird der Luftfederbalg-Druck $p_L$ gemessen und mit Einsetzen dieses Drucks $p_L$ in Formel [7] ergibt sich der Wert k der Kalibrierflächen-Korrekturfunktion (9) nach Fig. 4 für diese aktuelle Niveauhöhe h. Die Verbindung aller so ermittelten Korrekturwerte k über der Niveauhöhe h ergibt die Kurve (9) der Kalibrierflächen-Korrekturfunktion nach Fig. 4.

Um den messtechnischen Aufwand zu verringern, kann die Kalibrierflächen-Korrekturfunktion (9) auch durch einen Polygonzug (10a bzw. 10b) aus Geradenabschnitten (21, 22 bzw. 23, 24, 25, 26) angenähert werden. Hierbei ist ein Geradenabschnitt durch einen ersten Stützpunkt eines Flächen-Kalibrierwerts an einem ersten Ist-Niveau und einen zweiten Stützpunkt eines Flächen-Kalibrierwerts an einem zweiten Ist-Niveau festgelegt, und für den Polygonzug ist mindestens ein Geradenabschnitt vorgesehen.

Für den Polygonzug (10a) nach Fig. 4 sind zwei Geradenabschnitte (21, 22) vorgesehen, wobei für den ersten Stützpunkt (27) des Flächen-Kalibrierwertes für den ersten Geradenabschnitt (21) die minimale Niveauhöhe $h_{min}$ und für den zweiten Stützpunkt (28) des Flächen-Kalibrierwertes (Zahlenwert "1") die Kalibrierhöhe $h_0$ gewählt ist. In vergleichbarer Weise ist für den ersten Stützpunkt (28) des Flächen-Kalibrierwertes des zweiten Geradenabschnitts (22) die Kalibrierhöhe $h_0$ und für den zweiten Stützpunkt des Flächen-Kalibrierwertes die maximale Niveauhöhe $h_{max}$ gewählt. Da der Flächen-Kalibrierwert am Kalibrierniveau $h_0$ definitionsgemäß den Zahlenwert "1" hat, ist der vereinfachte Polygonzug (10a) mit den beiden Geradenabschnitten (21, 22) durch Messung des Luftfederbalg-Drucks an nur zwei weiteren Niveauhöhen, nämlich an der minimalen Niveauhöhe $h_{min}$ und an der maximalen Niveauhöhe $h_{max}$ bestimmbar. Weil die minimalen und maximalen Niveauhöhen Grenzlagen darstellen und ggf. nicht exakt einstellbar sind, kann statt ihrer auch ein Niveau im Bereich der minimalen bzw. maximalen Niveauhöhe $h_{min}$ bzw. $h_{max}$ eingestellt werden.

Für den Polygonzug (10b) der Kalibrierflächen-Korrekturfunktion nach Fig. 4 sind neben den Stützpunkten (27, 28, 29) der Flächen-Kalibrierwerte die beiden weiteren Stützpunkte (30 und 31) vorgesehen, deren aktuelle Niveauhöhen z. B. etwa in der Mitte der Bereiche zwischen der minimalen Niveauhöhe $h_{min}$ und der Kalibrierhöhe $h_0$ bzw. zwischen der Kalibrierhöhe $h_0$ und der maximalen Niveauhöhe $h_{max}$ liegen. Der Polygonzug ist daher aus den vier Geradenabschnitten (23, 24, 25, 26) gebildet und stellt im Vergleich zum Polygonzug (10a) eine bessere Annäherung dar. Beim Polygonzug (10b) ist also die Genauigkeit durch Einführung von lediglich zwei weiteren Stützpunkten verbessert und mit den insgesamt fünf Stützpunkten ist der Polygonzugs (10b) an eine Korrekturflächen-Korrekturfunktion (9) mit ihrem vergleichbar komplexen Niveauhöheneinfluss mit sehr guter Genauigkeit angenähert.

## Patentansprüche

1. Verfahren zur Steuerung einer Anfahrhilfe in einem Fahrzeug, das entweder als Einzelfahrzeug oder als Zugfahrzeug (37) eines Fahrzeugzugs aus Zugfahrzeug und Anhängefahrzeug ausgebildet ist, bei welchem neben einer Triebachse (34) mindestens eine entlastbare Achse (35) vorgesehen ist, wobei mindestens die Triebachse (34) und die mindestens eine entlastbare Achse (35) als luftgefederte Achsen mit jeweils mindestens einem, den Fahrzeugaufbau über der Achse abstützenden Luftfederbalg (3a, 3b) ausgebildet sind, und die Trieb- und entlastbaren Achsen(34, 35) weiter über eine Lastsensierungseinrichtung verfügen, wobei ein Soll-Niveau, nämlich ein vorgegebener Fahrzeugaufbau-Achsen-Abstand, durch eine elektronischen Niveauregeleinrichtung als Ist-Niveau eingehalten wird, mit folgenden Schritten:

    a) Nach Vorliegen einer Traktionserhöhungs-Anforderung werden in einem ersten Schritt die aktuellen Achslasten für die Triebachse (34) und die mindestens eine entlastbare Achse (35) bestimmt;
    b) in einem zweiten Schritt wird geprüft, ob die aktuelle Achslast der Triebachse (34) kleiner ist als ihre zulässige maximale Achslast;
    c) ist die aktuelle Achslast der Triebachse (34) nicht kleiner als ihre maximale Achslast, so wird keine Aktivierung der Traktionserhöhung vorgenommen;
    d) ist die aktuelle Achslast kleiner als die maximale Achslast, so wird in einem dritten Schritt die Traktionserhöhung aktiviert und es wird eine Entlastung (39) der mindestens einen entlastbaren Achse (35) vorgenommen,

    **dadurch gekennzeichnet, dass**
    die aktuellen Achslasten für die Triebachse (34) und die mindestens eine entlastbare Achse (35) als Achslast-Gewichtskräfte bestimmt werden und die Entlastung der mindestens einen entlastbaren Achse (35) als Kraftregelung durchgeführt wird und dass bei Entlastung der Druck in den der entlastbaren Achse (35) zugeordneten Luftfederbälgen verringert und der durch die Verringerung frei werdende Lastanteil auf die Triebachse (34) übertragen wird, wobei während der in zeitlichen Schritten durchgeführten Achslastverlagerung (8) per Kraftvergleich laufend überprüft wird, ob die maximal zulässige Achslast der Triebachse (34) unterschritten, erreicht oder überschritten wird und wobei die Achslastverlagerung (39) nur bis maximal dem Zustand durchgeführt wird, in dem die maximal zulässige Achslast der Triebachse (34) eingehalten ist.

2. Verfahren nach Anspruch 1, **dadurch gekennzeichnet, dass** die Achslast-Gewichtskraft für eine Achse, eine Anzeige-Fahrzeugachse (34, 35), durch den Druck ($p_L$) in den der Achse zugeordneten Luftfederbälgen (3a, 3b) und durch die wirksame Fläche ($A_W$) dieser, der Achse zugeordneten, Luftfederbälge bestimmt wird.

3. Verfahren nach Anspruch 2, **dadurch gekennzeichnet, dass** die Achslast-Gewichtskraft für die Anzeige-Fahrzeugachse (34, 35) durch das Produkt aus dem Druck ($p_L$) in den der Achse zugeordneten Luftfederbälgen (3a, 3b) und der wirksame Fläche ($A_w$) dieser, der Anzeige-Fahrzeugachse (34, 35) zugeordneten, Luftfederbälgen bestimmt wird.

4. Verfahren nach Anspruch 3, **gekennzeichnet durch** die folgenden Merkmale:

a) Für die Bestimmung der wirksamen Fläche ($A_W$) der der Anzeige-Fahrzeugachse (34, 35) zugeordneten Luftfederbälge (3a, 3b) ist eine Kalibrierfläche ($A_{W0}$) vorgesehen;
b) die Kalibrierfläche ($A_{W0}$) ist als wirksame Fläche der der Anzeige-Fahrzeugachse zugeordneten Luftfederbälge (3a, 3b) bei einem Kalibrierniveau ($h_0$) als Ist-Niveau bestimmt;
c) die Kalibrierfläche ($A_{W0}$) ist **durch** eine Funktion (k) korrigiert, welche die Abhängigkeit der der Anzeige-Fahrzeugachse zugeordneten wirksamen Fläche ($A_W$) der Luftfederbälge vom aktuellen Ist-Niveau (h) des Fahrzeugaufbaus beschreibt;
d) zur Korrektur der Kalibrierfläche ($A_{W0}$) wird das aktuelle Ist-Niveau (h) in die Kalibrierflächen-Korrekturfunktion eingesetzt.

5. Verfahren nach Anspruch 4, **dadurch gekennzeichnet, dass** ein Normal-Fahrniveau als Kalibrierniveau ($h_0$) festgelegt ist.

6. Verfahren nach Anspruch 4, **dadurch gekennzeichnet, dass** das kleinste Ist-Niveau ($h_{min}$) als Kalibrierniveau festgelegt ist.

7. Verfahren nach einem oder mehreren der Ansprüche 4 bis 6, **dadurch gekennzeichnet, dass** die Kalibrierfunktion (k, 9) durch das Verhältnis der wirksamen Fläche ($A_W$) der Luftfederbälge im aktuellen Ist-Niveau (h) zur Kalibrierfläche ($A_{W0}$) im Kalibrierniveau ($h_0$) bestimmt ist.

8. Verfahren nach Anspruch 7, **dadurch gekennzeichnet, dass** die Kalibrierfunktion (k) als aus Geradenabschnitten gebildeter Polygonzug (10a, 10b) ausgebildet ist, wobei ein Geradenabschnitt (21) durch einen ersten Stützpunkt (27) eines Flächen-Kalibrierwertes an einem ersten Ist-Niveau ($h_{min}$) und einen zweiten Stützpunkt (28) eines Flächen-Kalibrierwertes an einem zweiten Ist-Niveau ($h_0$) festgelegt ist, welche den Geradenabschnitt (21) begrenzen, und im Polygonzug mindestens ein Geradenabschnitt (21) vorgesehen ist.

9. Verfahren nach Anspruch 8, **dadurch gekennzeichnet, dass** für den Polygonzug (10a) zwei Geradenabschnitte, ein erster (21) und ein zweiter (22) Geradenabschnitt, vorgesehen sind, wobei für den ersten Geradenabschnitt (21) ein Ist-Niveau im Bereich des kleinsten Ist-Niveaus ($h_{min}$) für den ersten Stützpunkt (27) und das Kalibrierniveau ($h_0$) für den zweiten Stützpunkt (28) festgelegt sind, und wobei für den zweiten Geradenabschnitt (22) das Kalibrier-niveau ($h_0$) für den ersten Stützpunkt (28) und ein Ist-Niveau im Bereich des größten Ist-Niveaus ($h_{max}$) für den zweiten Stützpunkt (29) festgelegt sind.

10. Verfahren nach einem oder mehreren der Ansprüche 1 bis 9, **dadurch gekennzeichnet, dass** die Anfahrhilfe in einem Land unter Einhaltung der in diesem Land geltenden gesetzlich festgelegten zulässigen Achslasten durchgeführt wird.

11. Verfahren nach einem oder mehreren der Ansprüche 1 bis 10, **dadurch gekennzeichnet, dass** die Zeit für die Anfahrhilfen-Traktionserhöhung auf eine in einem Land geltende maximale Zeit begrenzt ist.

12. Verfahren nach einem oder mehreren der Ansprüche 1 bis 11, **dadurch gekennzeichnet, dass** die Anfahrhilfen-Traktionserhöhung auf eine bei der Anfahrhilfe in einem Land geltende maximale Geschwindigkeit des Fahrzeugs begrenzt ist.

**Claims**

1. Method for controlling a start-assist in a vehicle which is embodied either as an individual vehicle or as a traction vehicle (37) of a vehicle train composed of a traction vehicle and a trailer vehicle, in which in addition to a drive axle (34) at least one relievable axle (35) is provided, wherein at least the drive axle (34) and the at least one relievable axle (35) has air-suspension axles, each with at least one air spring bellows (3a, 3b) which supports the vehicle body via the axle, and the drive axle (34) and relievable axle (35) also have a load-sensing device, wherein a setpoint ride level, specifically a predefined vehicle body-axle distance is maintained as an actual ride level by means of an electronic ride level control device, having the following features:

a) after a traction-increasing request has been submitted, the current axle loads for the drive axle (34) and the at least one relievable axle (35) are determined in a first step;

b) in a second step it is tested whether the current axle load of the drive axle (34) is lower than its permissible maximum axle load;

c) if the current axle load of the drive axle (34) is not lower than its maximum axle load, the increase in traction is not activated; and

d) if the current axle load is lower than the maximum axle load, in a third step the increase in traction is activated and a process (39) of relieving the at least one relievable axle (35) is performed,

**characterized in that**

the current axle loads for the drive axle (35) and the at least one relievable axle (35) are determined as axle load weight forces and the relieving of the at least one relievable axle (35) is carried out as a force control, and **in that** when a relieving process takes place the pressure in the air spring bellows assigned to the relievable axle (35) is reduced and the proportion of the load which is freed up by the reduction is transmitted to the drive axle (34), wherein during the axle load displacement (8) which is carried out in chronological steps, it is continuously checked by comparison of forces whether the maximum permissible axle load of the drive axle (34) is undershot, reached or exceeded, and wherein the axle load displacement (39) is carried out only at maximum to the state in which the maximum permissible axle load of the drive axle (34) is complied with.

2. Method according to Claim 1, **characterized in that** the axle load weight force is determined for an axle, a display vehicle axle (34, 35), by means of the pressure ($p_L$) in the air spring bellows (3a, 3b) assigned to the axle and by means of the effective area ($A_W$) of these air spring bellows which are assigned to the axle.

3. Method according to Claim 2, **characterized in that** the axle load weight force for the display vehicle axle (34, 35) is determined by the product of the pressure ($p_L$) in the air spring bellows (3a, 3b) assigned to the axle and the effective area ($A_W$) of these air spring bellows assigned to the display vehicle axle (34, 35).

4. Method according to Claim 3, **characterized by** the following features:

a) for the determination of the effective area ($A_W$) of the air spring bellows (3a, 3b) assigned to the display vehicle axle (34, 35) a calibration area ($A_{wo}$) is provided;

b) the calibration area ($A_{wo}$) is determined as an effective area of the air spring bellows (3a, 3b) assigned to the display vehicle axle in the case of a calibration ride level ($h_0$) as an actual ride level;

c) the calibration area ($A_{wo}$) is corrected by a function (k) which describes the dependence of the effective area ($A_w$), assigned to the display vehicle axle, of the air spring bellows on the current actual ride level (h) of the vehicle body;

d) the current actual ride level (h) is inserted into the calibration area correction function in order to correct the calibration area ($A_{wo}$).

5. Method according to Claim 4, **characterized in that** a normal ride level is defined as a calibration ride level ($h_0$).

6. Method according to Claim 4, **characterized in that** the smallest actual ride level ($h_{min}$) is defined as a calibration ride level.

7. Method according to one more of Claims 4 to 6, **characterized in that** the calibration function (k, 9) is determined by the ratio of the effective area ($A_w$) of the air spring bellows in the current actual ride level (h) to the calibration area ($A_{wo}$) in the calibration ride level ($h_0$).

8. Method according to Claim 7, **characterized in that** the calibration function (k) is embodied as a polygon course (10a, 10b) formed from straight sections, wherein a straight section (21) is defined by a first reference point (27) of an area calibration value at a first actual ride level ($h_{min}$) and a second reference point (28) of an area calibration value at a second actual ride level ($h_0$), which reference points (27, 28) bound the straight section (21), and at least one straight section (21) is provided in the polygon course.

9. Method according to Claim 8, **characterized in that** two straight sections, a first straight section (21) and a second straight section (22) are provided for the polygon course (10a), wherein an actual ride level in the region of the smallest actual ride level ($h_{min}$) is defined ovided for the first straight section (21) for the first reference point (27), and the calibration ride level ($h_0$) is defined for the second reference point (28), and wherein the calibration ride level ($h_0$) for the second straight section (22) is defined for the first reference point (28), and an actual ride level in the region of the largest actual ride level ($h_{max}$) is defined for the second reference point (29).

10. Method according to one or more of Claims 1 to 9, **characterized in that** the start-assist is carried out in a country by complying with the permissible axle loads which are legally defined as applicable in this country.

11. Method according to one or more of Claims 1 to 10, **characterized in that** the time for the increase in traction for the start-assist is limited to a maximum time which is applicable in a country.

12. Method according to one or more of Claims 1 to 11, **characterized in that** the increase in traction for the start-assist is limited to a maximum speed of the vehicle which is applicable for the start-assist in a country.

## Revendications

1. Procédé de commande d'une aide au démarrage dans un véhicule configuré comme véhicule simple ou comme véhicule tracteur (37) d'un convoi constitué d'un véhicule tracteur et d'un véhicule remorqué et dans lesquels au moins un essieu délestable (35) est prévu en plus d'un essieu moteur (34),
au moins l'essieu moteur (34) et le ou les essieux délestables (35) étant configurés comme essieux à suspension pneumatique dotés chacun d'au moins un soufflet (3a, 3b) de suspension pneumatique qui assied le châssis du véhicule sur l'essieu,
l'essieu moteur et les essieux délestables (34, 35) disposant de plus d'un dispositif de détection de charge et un niveau de consigne, à savoir une distance prédéterminée entre l'essieu et le châssis du véhicule, étant maintenu en tant que niveau effectif par l'intermédiaire d'un dispositif électronique de régulation de niveau, le procédé comportant les étapes suivantes :

a) dans une première étape, les charges effectives appliquées sur l'essieu moteur (34) et le ou les essieux délestables (35) sont déterminées en fonction de l'existence d'une demande d'augmentation de traction,
b) dans une deuxième étape, on vérifie si la charge effective de l'essieu moteur (34) est inférieure à sa charge maximale admissible,
c) si la charge effective de l'essieu moteur (34) n'est pas inférieure à sa charge maximale, l'augmentation de la traction n'est pas activée et
d) dans une troisième étape, si la charge effective de l'essieu est inférieure à la charge maximale de l'essieu, l'augmentation de la traction est activée et un délestage (39) du ou des essieux délestables (35) est réalisé,

**caractérisé en ce que**
les charges effectives de l'essieu moteur (34) et du ou des essieux délestables (35) sont définies comme étant les forces de gravité sollicitant l'essieu et le délestage du ou des essieux délestables (35) est réalisé sous la forme d'une régulation de force,
**en ce qu'**en cas de délestage, la pression dans les soufflets des suspensions pneumatiques associées à l'essieu délestable (35) est diminuée et la partie de la charge libérée par cette diminution est transférée sur l'essieu moteur (34),
**en ce que** pendant le déplacement (8) des charges exercées sur les essieux exécutées en étapes successives, on vérifie en permanence par comparaison des forces si la charge maximale admissible de l'essieu moteur (34) est maintenue, atteinte ou dépassée, le déplacement (39) de la charge sur les essieux étant réalisé au plus jusqu'à ce que l'on atteigne une situation dans laquelle la charge maximale admissible de l'essieu moteur (34) est respectée.

2. Procédé selon la revendication 1, **caractérisé en ce que** la force de gravité qui charge un essieu qui est un essieu indicateur (34, 35) du véhicule est déterminée à partir de la pression ($p_L$) qui règne dans les soufflets (3a, 3b) des suspensions pneumatiques associées à l'essieu et de la surface efficace ($A_W$) de ces soufflets des suspensions pneumatiques associées à l'essieu.

3. Procédé selon la revendication 2, **caractérisé en ce que** la force de gravité qui agit comme charge sur l'essieu indicateur (34, 35) du véhicule est déterminée à partir du produit de la pression ($p_L$) qui règne dans les soufflets (3a, 3b) des suspensions pneumatiques associées à l'essieu et de la surface efficace ($A_w$) de ces soufflets des suspensions pneumatiques associées à l'essieu indicateur (34, 35) du véhicule.

**4.** Procédé selon la revendication 3, **caractérisé par** les caractéristiques suivantes :

a) une surface d'étalonnage ($A_{w0}$) est prévue pour la détermination de la surface efficace ($A_w$) des soufflets (3a, 3b) des suspensions pneumatiques associées à l'essieu indicateur (34, 35) du véhicule,

b) la surface d'étalonnage ($A_{w0}$) est déterminée comme étant la surface efficace des soufflets (3a, 3b) des suspensions pneumatiques associées à l'essieu indicateur du véhicule pour un niveau d'étalonnage ($h_0$) pris comme niveau effectif,

c) la surface d'étalonnage ($A_{w0}$) est corrigée par une fonction (k) qui décrit la dépendance de la surface efficace ($A_w$) des soufflets des suspensions pneumatiques associées à l'essieu indicateur du véhicule vis-à-vis du niveau effectif (h) du châssis du véhicule et

d) pour corriger la surface d'étalonnage ($A_{w0}$), le niveau effectif (h) est introduit dans la fonction de correction de la surface d'étalonnage.

**5.** Procédé selon la revendication 4, **caractérisé en ce qu'**un niveau normal de roulage est défini comme niveau d'étalonnage ($h_0$).

**6.** Procédé selon la revendication 4, **caractérisé en ce que** le plus petit niveau effectif ($h_{min}$) est défini comme niveau d'étalonnage.

**7.** Procédé selon l'une ou plusieurs des revendications 4 à 6, **caractérisé en ce que** la fonction d'étalonnage (k, 9) est définie par le rapport entre la surface efficace ($A_w$) des soufflets de suspension pneumatique au niveau effectif (h) et la surface d'étalonnage ($A_{w0}$) au niveau d'étalonnage ($h_0$).

**8.** Procédé selon la revendication 7, **caractérisé en ce que** la fonction d'étalonnage (k) est formée d'une ligne polygonale (10a, 10b) formée de segments de droite, un segment de droite (21) étant défini par un premier point d'appui (27) qui est une valeur d'étalonnage de surface à un premier niveau effectif ($h_{min}$) et un deuxième point d'appui (28) qui est une valeur d'étalonnage de surface à un deuxième niveau effectif ($h_0$), ces points d'appui délimitant le segment de droite (21), au moins un segment de droite (21) étant prévu dans la ligne polygonale.

**9.** Procédé selon la revendication 8, **caractérisé en ce que** deux segments de droite, à savoir un premier segment de droite (21) et un deuxième segment de droite (22), sont prévus dans la ligne polygonale (10a), un niveau effectif de l'ordre du plus petit niveau effectif ($h_{min}$) étant défini comme premier point d'appui (27) et le niveau d'étalonnage ($h_0$) comme deuxième point d'appui (28) par le premier segment de droite (21), le niveau d'étalonnage ($h_0$) étant défini comme premier point d'appui (28) du deuxième segment de droite (22) et le niveau effectif de l'ordre du plus grand niveau effectif ($h_{max}$) comme deuxième point d'appui (29).

**10.** Procédé selon l'une ou plusieurs des revendications 1 à 9, **caractérisé en ce que** l'aide au démarrage est réalisée dans un pays en respectant les charges à l'essieu admissibles définies par la loi dans ce pays.

**11.** Procédé selon l'une ou plusieurs des revendications 1 à 10, **caractérisé en ce que** la durée de l'augmentation de traction par l'aide au démarrage est limitée à une durée maximale en vigueur dans un pays.

**12.** Procédé selon l'une ou plusieurs des revendications 1 à 11, **caractérisé en ce que** l'augmentation de traction de l'aide au démarrage est limitée à une vitesse maximale du véhicule en vigueur pour une aide au démarrage dans un pays.

Fig. 1

Fig.2a                                    Fig.2b

EP 1 571 014 B1

Fig.3

EP 1 571 014 B1

Fig.4

EP 1 571 014 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0411352 B1

- WO 0056561 A